## Europäisches Patentamt
## European Patent Office
## Office européen des brevets

(19)

(11) Publication number: **0 058 292**
A2

(12)

# EUROPEAN PATENT APPLICATION

(21) Application number: 82100145.0

(22) Date of filing: 11.01.82

(51) Int. Cl.³: **G 01 F 11/02**
**A 61 M 5/00, G 01 F 13/00**

(30) Priority: 29.01.81 IT 6711381

(43) Date of publication of application:
25.08.82 Bulletin 82/34

(84) Designated Contracting States:
AT BE CH DE FR GB LI LU NL SE

(71) Applicant: SOXIL S.p.A. GRUPPO PIERREL
Via Antonelli 3
I-20139 Milano(IT)

(72) Inventor: Simondi, Giovanni
Via Cuneo, 13
I-12025 Dronero (Cuneo)(IT)

(72) Inventor: Pirone, Bruno
Via San Maurizio I-12010 Frazione San Rocco
Castagnaretta (Cuneo)(IT)

(74) Representative: Prato, Roberto et al,
c/o Ingg. Carlo e Mario Torta Via Viotti 9
I-10121 Torino(IT)

(54) Apparatus for dispensing a predetermined quantity of a substantially liquid product for therapeutic use in a presettable time.

(57) Apparatus for dispensing a predetermined quantity of a substantially liquid product for therapeutic use within a presettable time is described. This apparatus comprises an auxiliary reservoir (10) of predetermined volume disposed downstream from a general reservoir (1) containing the said product, a pump (7) for dispensing the said product located downstream from the said auxiliary reservoir (10), control means (17) for the said pump (7) for regulating the quantity of product dispensed in the said presettable time, at least one connection duct (3, 6) for the passage of the said product, disposed between the said general reservoir (1) and the said auxiliary reservoir (10), and between the said auxiliary reservoir (10) and the said pump (7), and extending to a distribution end, detachable connection means (2, 5) between the said duct (3, 6) and the said general (1) and auxiliary (10) reservoirs and a closure valve (4) for the said duct (3) in the section connecting between the said general reservoir (1) and the auxiliary reservoir (10).

Fig.1

EP 0 058 292 A2

1

"APPARATUS FOR DISPENSING A PREDETERMINED QUANTITY OF

A SUBSTANTIALLY LIQUID PRODUCT FOR THERAPEUTIC USE IN

A PRESETTABLE TIME"

The present invention relates to apparatus for dispensing in a presettable time, a predetermined quantity, conveniently by volume, of a substantially liquid product for therapeutic use; this can be a physio logical or medicinal solution etc.

Known apparatus of this type includes, in particular, an auxiliary reservoir of predetermined volume disposed downstream from a general reservoir containing the product and connected by a first duct to  the said general reservoir with the interposition of a closure valve, and by a a second duct to a distribution or outlet end to a patient. In this auxiliary reservoir there is disposed a piston controlled by a reciprocating mechanism, which piston, when it moves in one direction, draws the said product from the said general reservoir to the said auxiliary reservoir, and when it moves in the other direction, for the presettable dispensing time, dispenses the quantity of product contained in the auxiliary reservoir, from the auxiliary reservoir to the distribution end.

If it is necessary to dispense a further quantity of this product, the intake of the product from the general reservoir and the subsequent dispensing from the distribution end is repeated by means of the piston of the auxiliary reservoir.

When it is required to utilise the apparatus for a subsequent patient it is necessary, because of the rules of hygiene, and to avoid any possible bacteriological contaminations etc., for those elements in communication with the passage through which the product is dispensed to the patient not to be used for different patients; the auxiliary reservoir and its two ducts connecting between the main reservoir and the distribution end are therefore replaced.

Now, even if this auxiliary reservoir and these two ducts are made of plastics material, the cost of their complete replacement constitutes a relatively significant proportion of the overall cost of each dispensing treatment to each patient. The object of the present invention is to provide an apparatus for the said use, which will be of relatively simple and economic construction, and which allows the elements which must be replaced in the treatment of different patients to be reduced so as to reduce the running costs whilst maintaining the maximum security required by the ruled of hygiene.

Other objects and advantages obtained with the apparatus of the present invention will become apparent from the description which follows:

According to the present invention there is provided apparatus for dispensing a predetermined quantity of a substantially liquid product for therapeutic use, within a presettable time, characterised by the fact that it comprises an auxiliary reservoir of predetermined volume, disposed downstream of a general reservoir containing the said product, a pump for the dispensing of the said product, disposed downstream of the said auxiliary reservoir, control means for the said pump for regulating the quantity of product dispensed in the said presettable time, at least one connection duct for the passage of the said product, located between the said general reservoir and the said auxiliary reservoir, and between the said auxiliary reservoir and the said pump and extending to a dispensing end, detachable connection means between the said duct and the said general and auxiliary reservoirs, and a closure valve for the said duct in the section connecting between the said general and auxiliary reservoirs.

For a better understanding of the present invention one embodiment of it will now be described, by way of example, with reference to the attached drawings, in which:

Figure 1 is a schematic block diagram of the apparatus of the present invention;

Figure 2 is a detailed electrical diagram of a compo nent block of the apparatus of Figure 1;

Figure 3 is an upper sectioned view of a pump constituting a part of the apparatus of Figure 1;
and

Figures 4a and 4b illustrate operating cycles of various component elements of the apparatus of Figure 1.

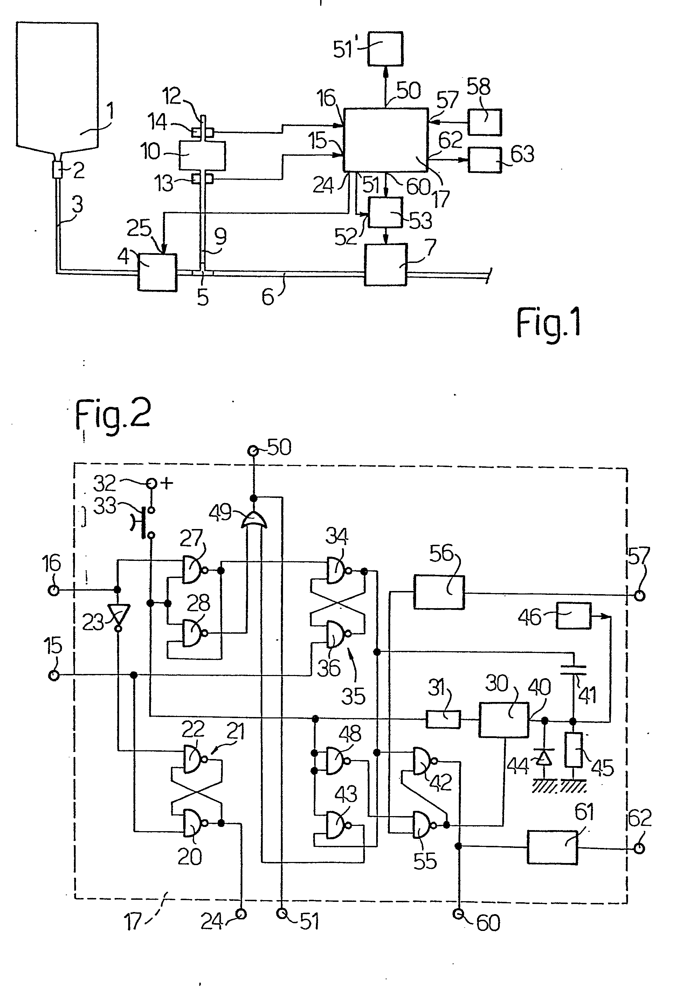

With reference to Figure 1, there is generally indicated with the reference numeral 1 a general reservoir for a substantially liquid product for therapeutic use, a predetermined quantity of which is to be dispensed within a presettable time. This reservoir 1 is known and normally does not form part of the present apparatus. The outlet duct of this reservoir 1 is connected, by means of an attachment element 2 of known type for ensuring sterility, comprising for example a needle which is inserted through a rubber valve, at one end of a flexible duct 3 of type known for therapeutic use. This duct 3 passes through a solenoid closure valve 4 of known type, which acts on the exterior of the duct 3 itself, for example by means of a movable element which enters a wedge region where the said duct passes, and then extends to a T-shape connection element 5, also of known type whith antiseptic connection characteristics.

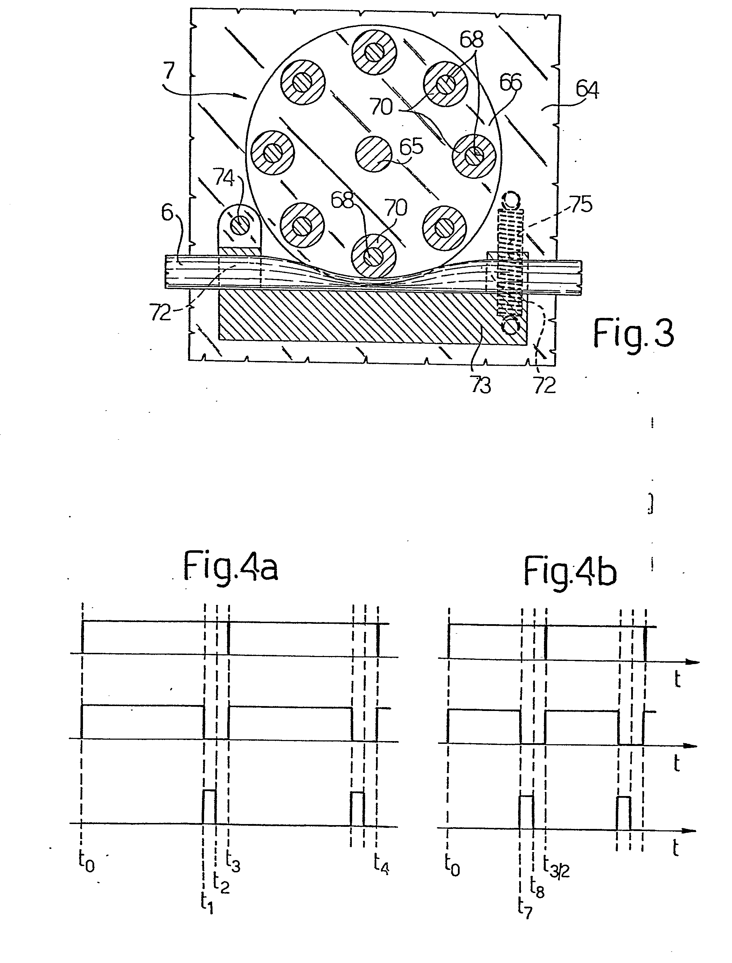

From this element 5 a duct 6 extends towards a pump 7, conveniently of the peristaltic type, which operates only on the exterior of the said duct 6 as will be better described with reference to Figure 3.

The duct 6 then extends to a dispensing outlet to patient, of known type not illustrated.

From the connector element 5 there extends upwardly a duct 9 which terminates at an auxiliary reservoir 10 of predetermined volume, for example 5 cc.
This reservoir 10 has an upwardly extending breather
duct 12.

This reservoir 10, together with the two ducts 9
and 12, is conveniently made of transparent plastics
material.

Close to the attachment region of the ducts 9
and 12 to the reservoir 10 there are arranged two
pairs of optical sensors 13 and 14 respectively, of
differential type for detecting the attainment of
minimum and maximum levels of product in the reservoir 10. This pair of sensors avoids detector errors due to variations in the transparency of the product used. The sensors 13 and 14 are connected to
respective input terminals 15 and 16 of a processor
block 17 which controls the operation of the whole of
the apparatus, and which will now be described in
detail with reference to Figure 2.

The terminal 15 is connected to an input of a
NAND gate 20 of a bistable multivibrator 21 which
also includes a NAND gate 22 to the input of which is
connected the terminal 16, by means of an inverter 23.
The output of the multivibrator 21 is connected to an
output terminal 24 which is connected to a control
terminal 25 of the solenoid valve 4. The terminal 16
is also connected to an input of a NAND gate 27 to the other input of which, and thus also to an input of a NAND gate 28, is connected both the output of a fixed-count counter block 30, via a resistor 31 in series, and the connection from a supply terminal 32 at a voltage + V, via a series connected push button 33 of normally open type.

The output of the NAND gate 27 is connected both to the other input of the NAND gate 28 and to an input of a NAND gate 34 of a bistable multivibrator 35 which also includes a NAND gate 36 to the input of which the terminal 15 is connected. The output of the multivibrator 35 is connected, via a series connected capacitor 41, to a zeroing input 40 of the counter block 30, and to one input of a NAND gate 42, and to one input of a NAND gate 43.

To the zeroing input 40 of the counter block 30 there is also connected a cathode of a diode 44 the anode of which is earthed; the input 40 is also earthed via a resistor 45. To this input 40 there is also connected the output of a block 46 for generating an automatic zeroing signal when the apparatus is switched on. The output of the counter block 30 is connected, via the resistor 31, to the two inputs of a NAND gate 48 and to the other input of the NAND gate 43 the output of which is connected to an OR gate 49 together with the output of the NAND gate 28. The output of the OR gate 49 is connected to an output terminal 50 which is then connected to an acoustic and/or optical alarm indicator device 51', and to an output terminal 51 which is connected to a stop input 52 of a block 53 which controls the pump 7.

The output of the NAND gate 48 is connected to an input of a NAND gate 55 to the other input of which is connected the output of a VCO oscillator block 56 the input of which is connected to an input terminal 57 to which is connected the output of a block 58 for setting the value of the frequency produced by the block 56 and including a plurality of number selecting digital switches of known type.

The output of the NAND gate 55 is connected to the other input of the NAND gate 42 and to the counting input of the counter block 30. The output of the NAND gate 42 is connected to an output terminal 60 which is then connected to the input of the control block 53 for the pump 7, and moreover is connected to a divider block 61 which provides, at an output terminal 62, a signal proportional to the number of cc dispensed. This output terminal 62 is connected to a counter and display block 63 for displaying the number of cc dispensed by the pump 7.

With reference to Figure 3, the pump 7 is illustrated in position on a panel 64, and is driven by a small stepping motor which has an output shaft 65 which projects out above the panel 64 and on which there is fixed a disc 66 above which there is fixed, at a distance greater than the diameter of the duct 6, a second disc (not visible) of the same diameter as the disc 66, by means of a plurality of spacer pins 68 distributed around the circumference of the disc 66 and around which there are positioned corresponding hollow rollers 70. These rollers 70 are intended to come into contact with the duct 7 and to compress it progressively during the rotation of the pump 7 as will be described below. This duct 6, on the upper side of the disc 66, is inserted through two end grooves 72 formed in a C-shape body 73 which serves for support and positioning of the duct 6. This body 73 is connected at one end by a pin 74 onto the panel 64, whilst at the other end it is fixed to one end of a spring 75 the other end of which is fixed to the panel 64.

The operation of the apparatus of the present invention as described will become apparent during the following discussion.

At the beginning of the cycle the reservoir 1 contains the product to be dispensed, the solenoid valve 4 is closed and the auxiliary reservoir 10, with its associated intake duct 9 and breather duct 12, is empty; the pump 7 is de-energised so that the passage of the product is prevented. Subsequently the solenoid valve 4 is opened and under the action of gravity (since the auxiliary reservoir 10 is located at a lower height than that of the reservoir 1) the auxiliary reservoir 10 is filled to the level of the pair of sensors 14 which then control the closure of the solenoid valve 4. A manual start command will then make the counter block 30 start to count, and this is controlled by the impulses which come from the oscillator block 56 and which also control the operation of the pump 7. The selected time (for example one hour) within which it is desired that the quantity of product (for example 5 cc) contained in the auxiliary reservoir 10 is to be dispensed is selected by the setting on the block 58; in fact, what is selected is the frequency of the output signals from the oscillator block 56 and therefore the frequency of operation of the peristaltic pump 7 (this pump, at each operation, causes the dispensing of a certain fraction of a cc dependent on the characteristics of the pump 7 and the duct 6).

The number which the counter block 30 must reach in order to determine the end of a complete cycle dispensing the contents of the reservoir 10 is preset and greater than the number of impulses sent to the pump 7, that is such as to be reached in a time greater by a certain amount than the dispensing time of the pump 7.

With reference to Figure 4a, the upper line illustrates the cycle of the counter block 30 from $t_0 - t_3$ which, as mentioned, is assumed to be one hour. In the centre line there is illustrated the cycle of operation of the pump 7 from $t_0 - t_1$, which is for example 59 minutes, that is the time, less than one hour, during which complete emptying of the auxiliary reservoir 10 takes place. This complete emptying is in fact detected at time $t_1$ by the pair of sensors 13, which control stopping of the pump 7 and consequent opening of the solenoid valve 4 so that the auxiliary reservoir 10 is again refilled until a level is reached which is detected by the pair of sensors 14, that is until the predetermined quantity to be contained by the reservoir 10 is achieved. This filling stage takes place in the time $t_1 - t_2$, and terminates before the time $t_3$ at the end of the cycle of the counter block 30. The apparatus waits in fact, until the time $t_3$ has passed, after which it will, in an automatic manner, resume a new dispensing cycle (one hour) with the pump 7 starting up again.

If the setting of the dispensing time is varied, for example 30 minutes (Figure 4b) the frequency of the output signal from the oscillator block 56 is doubled so as to halve the duration from $t_0 - t_{3/2}$ of the cycle of the counter block 30, and correspondingly to reduce the operating time $(t_0 - t_7)$ of the pump 7.

With reference to Figure 2, the operation of the apparatus of the present invention will now be described in detail.

Initially, after switching on the apparatus, there not being any liquid in the duct 9, the signals at the inputs 15 and 16 are at a low level, the output of the multivibrator 21 is at a high level, and the solenoid valve 4 is open. The output of the multivibrator 35, the input of the terminal 15 being at a low level, is also at a low level, and thus the input of the gate 42 is also at a low level and no operating impulse can come from the oscillator block 56 to the pump control block 53 which latter is therefore inactive. Since the corresponding input to the gate 43 is at a low level also, the output is at a high level and the alarm device 51, which operates with a low level signal, is disactivated. The output of the counter-block 30, which is zeroed by the circuit 46 when the apparatus is switched on, is at a low level; the output of the gate 28 is therefore at a high level and therefore the alarm device 51 is not activated. The output of the gate 48 and consequently the input of the gate 55 are at a high level and therefore the impulses produced by the oscillator 56 at a frequency established by the block 58 can reach the counter block 30. As the liquid in the duct 9 rises

the signal at the terminal 15 will change to a high level (without causing any change in the preceding conditions) and after the reservoir 10 has filled the signal at the terminal 16 will change to a high level causing the input to the gate 22 to fall to the low level. The output of the multivibrator 21 will change to a low level and the solenoid valve 4 will close.

At this point, if there is no external intervention, the counter block 30 will reach, in a time which is dependent upon the frequency set by the oscillator block 56, the value for which it is programmed, after which its output will go to a high level carrying the input to the gate 55 to a low level and therefore blocking the pulses arriving at its other input. The two inputs to the gate 27 will be at a high level so that its output will be at a low level and will change the output of the multivibrator 35 to a high level thus zeroing the counter block 30, via the condenser 41, bringing its output to a low level. The input to the gate 55 will return to a high level and the pulses from the oscillator block 56 can again reach the counter block 30. Since the input of the gate 42 is at a high level the pulses can reach the pump control block 53 via this gate 42. The display block 63 is controlled through the block 61 which provides a signal dependent on the pulses sent to the pump 7 and proportional to the number of cc dispensed.

The output of the gate 43, which for a short time falls to a low level, will return to the high level and the alarm will not have been operated.

If it is desired to speed up the dose as an operative function of the apparatus without waiting for the counter block 30 to have reached its proper setting, it is only necessary to operate the push button 33 as soon as the liquid has reached the level of the pair of sensors 14. In these conditions the operation of the pump 7 will make the level of the liquid fall and therefore the signal at the terminal 15 will return to the low level without for the moment causing any changes. When the liquid has fallen below the level of the pair of sensors 13 the signal at the terminal 15 will go to the low level causing commutation of the multivibrator 21 which will make the solenoid valve 4 open. This will also cause commutation of the multivibrator 35 in such a way that the output thereof will go to the low level preventing pulses from reaching the pump control block 53. The filling of liquid into the auxiliary reservoir 10 will therefore be repeated and as soon as the counter block 30 has reached its set value a new dispensing cycle will automatically be repeated.

When, from external causes (for example a lack of liquid in the reservoir 1) the output of the pair of sensors 14 cannot go to a high level, thus maintaining the output of the gate 27 and the input of the gate 28 at a high level, the output of the gate 28 will go to a low level when its input receives a high level signal from the output of the counter block 30, thus operating the alarm device 51' and acting on the block 53 to stop the pump 7.

When the output of the counter block 30 does not go to a high level before the liquid, under the action of the pump 7, has fallen below the pair of sensors 13 (indicating abnormal operation) the input of the gate 43 will be at a high level and at the same time the output of this gate will be at the low level so that, similarly, the alarm device 51 will be operated and the pump 7 stopped. Therefore, to dispense a predetermined quantity (determined by the volume of the auxiliary reservoir 10, of substantially liquid product for therapeutic use, which is contained in the reservoir 1, in a presettable time selected by means of the block 58, it is sufficient to connect the ducts 3 and 6 with the antiseptic couplings 2 and 5 to the reservoir 1 and to the auxiliary reservoir 10 after having positioned these tubes 3 and 6 respectively between the solenoid valve 4 and the pump 7, and then to activate the

— 15 —

apparatus which operates in the manner described above.

If it is desired to repeat further dispensing cycles for the same patient this takes place automatically as described.

If, on the other hand the apparatus is to be utilised for another patient, it is sufficient, for the purpose of satisfying the necessary rules of hygiene, to replace only the ducts 3, 6, 9 and reservoir 10, that is to say therefore affording the advantage of having a significant reduction in the running costs of the apparatus inasmuch as these ducts 3, 6, 9 and the reservoir 10 (which is a simple container without an internal piston) are of relatively low cost.

The advantageous characteristics of the apparatus of the present invention are therefore also due to having the induction element (reservoir 10) for liquid from the general reservoir separate from the dispensing element (pump 7) for this liquid; of having simple gravity filling of this auxiliary reservoir 10 from the reservoir 1; of having a pump of a peristaltic type for dispensing the product (which avoids any return flow of liquid), of having a complete dispensing time for the present quantity which is a little less than the complete cycle time so as to allow a refilling stage of the dispensing reservoir with the pump stopped.

From the above description the advantages of the apparatus of the present invention will be apparent.

Finally, it will be clear that the embodiments of the apparatus of the present invention described and illustrated can be modified and varied without departing from the scope of the invention itself.

For example, the auxiliary reservoir 10 can be replaced with a different container of calibrated volume, or even with a tube. The ducts 9 and 12 need not be transparent and the level sensors 13 and 14 can be of different type, for example capacitive, ultrasonic etc.

The pump 7 can be controlled by a small synchronous motor the operation of which is controlled in steps by impulse signals provided from the output 60 of the block 17, and stopped via a bistable multivibrator by a detector element, for example a magnetic detector, positioned adjacent the path of the teeth of a disc fixed to the shaft of this synchronous motor, as described in Italian Patent Application No. 67568 — A/80 of 11th April, 1980 in the name of the same Applicant, and which is incorporated herein simply for reference to the necessary parts.

Claims

1. Apparatus for dispensing a predetermined quantity of a substantially liquid product for therapeutic use, in a presettable time, characterised by the fact that it comprises an auxiliary reservoir (10) of predetermined volume, located downstream from a general reservoir (1) containing the said product, a pump (7) for dispensing the said product located downstream of the said auxiliary reservoir (10); control means for the said pump (7) for regulating the quantity of product dispensed in the said presettable time, at least one connection duct (3,6) for the said product, located between the said general reservoir (1) and the said auxiliary reservoir (10), and between the said auxiliary reservoir (10) and the said pump (7) and extending to a dispensing end; detachable connection means (2, 5) between the said duct (3, 6) and the said general reservoir (1) and auxiliary reservoir (10), and a closure valve (4) for the said duct (3) in the section lying between the said general reservoir (1) and the auxiliary reservoir (10).

2. Apparatus according to Claim 1, characterised by the fact that the said auxiliary reservoir (10) is connected by a branch section (9) of the connection duct (3, 6) between the said general reservoir (1 ) and the said pump (7).

3.     Apparatus according to Claim 1 or Claim 2, characterised by the fact that the upper region of the said auxiliary reservoir (10) is located at a lower height than the minimum height of the said general reservoir (1).

4.     Apparatus according to any of the preceding Claims, characterised by the fact that it includes means (13, 14) for detecting the condition of complete filling and complete emptying of the auxiliary reservoir (10).

5.     Apparatus according to Claim 4, characterised by the fact that the said detector means (13, 14) include pairs of differential optical sensors disposed, respectively, on the duct (9) which communicates with the said auxiliary reservoir (10) and on an upper breather duct (12).

6.     Apparatus according to any preceding Claim, characterised by the fact that the said pump 7 is a peristaltic pump.

7.     Apparatus according to any of the preceding Claims, characterised by the fact that the said control means (17) for the said pump include means (56, 30) for regulating the operation thereof in such a way as to cause emptying of the said auxiliary reservoir (10) in a time less by a certain amount than the said presettable time, and for controlling the subsequent filling of the said auxiliary reservoir (10) within the said certain amount of time.

8. Apparatus according to any preceding Claim, characterised by the fact that it includes programmable elements (58) for setting the said presettable time.

9. Apparatus according to any preceding Claim, characterised by the fact that it includes display means (63) for displaying the said quantity of dispensed product.

Fig.1

Fig.2

Fig.3

Fig.4a

Fig.4b